# EUROPÄISCHE PATENTSCHRIFT

(11) **EP 3 960 595 B1**
(45) Veröffentlichungstag und Bekanntmachung des Hinweises auf die Patenterteilung: **24.06.2026**
(21) Anmeldenummer: 21192141.6
(22) Anmeldetag: 19.08.2021
(51) Int. Cl.: B62D 63/06

(54) **ANHÄNGER**
TRAILER
REMORQUE

(30) Priorität: 24.08.2020 DE 102020210720
(43) Veröffentlichungstag der Anmeldung: 02.03.2022
(73) Patentinhaber: Eiler, Jean, 75428 Illingen (DE); Eiler, Marcel Jean, 75428 Illingen (DE)
(72) Erfinder: Eiler, Jean, 75428 Illingen (DE); Eiler, Marcel Jean, 75428 Illingen (DE)
(74) Vertreter: BRP Renaud & Partner mbB Rechtsanwälte Patentanwälte Steuerberater

(56) Entgegenhaltungen:
- WO-A1-2013/020210
- DE-U1- 202009 011 491
- US-A1- 2007 278 766
- US-B1- 7 651 117

## Beschreibung

Die vorliegende Erfindung betrifft einen Anhänger für ein Kraftfahrzeug, der ein Fahrgestell sowie eine Deichsel aufweist.

Anhänger sind aus dem Stand der Technik hinlänglich bekannt. Sie dienen in der Regel dem Transport einer Last und werden von einem zugehörigen Kraftfahrzeug angetrieben, insbesondere gezogen. Derartige Anhänger lassen sich lösbar an einem Kraftfahrzeug anbringen. Wird der Anhänger also nicht gebraucht, kann er vom Kraftfahrzeug gelöst und gelagert werden.

Bei der Lagerung des Anhängers nimmt dieser unnötigen großen Raum in Anspruch. Aus dem Stand der Technik ist es daher bekannt, Anhänger klappbar auszugestalten, um den Anhänger in einem geklappten Klappzustand mit einem reduzierten Raumbedarf zu lagern.

Ein solcher Anhänger ist aus der WO 2019/162433 A1 bekannt. Der Anhänger weist ein Fahrgestell mit einer vorderen Plattform und einer hinteren Plattform auf, welche im Gebrauchszustand eine Ladefläche des Anhängers bilden. Die vordere Plattform ist mit einer Deichsel verbunden. Vordere Plattform und hintere Plattform sind über eine Klappachse relativ zueinander klappbar. Somit ist es möglich, die Plattformen im Gebrauchszustand auseinander zu klappen, sodass die vordere Plattform zwischen der Deichsel und der hinteren Plattform angeordnet ist. Somit ist es ferner möglich, in einem geklappten Zustand die Plattformen relativ zueinander derart zu klappen, dass die Ladeflächen der Plattformen einander zugewandt sind. Ein Zugelement verhindert hierbei ein unbeabsichtigtes Klappen der Plattformen relativ zueinander.

Die WO 2013/020210 A1 zeigt einen Anhänger mit einem Träherrahmen und einer damit verbundenen Deichsel. Die Deichsel lässt sich dabei relativ zum Trägerrahmen in einer X-Richtung verschieben und sichern.

Weitere Anhänger sind aus der US 2007/278766 A1 und der DE 20 2009 011 491 U1 bekannt.

Die vorliegende Erfindung beschäftigt sich mit der Aufgabe, für einen Anhänger der eingangs genannten Art eine verbesserte oder zumindest andere Ausführungsform anzugeben, die sich insbesondere durch einen reduzierten Raumbedarf zum Lagern und eine vereinfachte Handhabung auszeichnet.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Deichsel eines Anhängers relativ zu einem Fahrgestell des Anhängers in einer Richtung, in welcher die Deichsel auf das Fahrgestell folgt, verschiebbar auszugestalten. Somit lässt sich die Deichsel beim Gebrauch des Anhängers relativ zum Fahrgestell rausschieben. Ferner lässt sich die Deichsel, insbesondere wenn der Anhänger nicht gebraucht wird, hin zum Fahrgestell verschieben. Somit lässt sich der Anhänger im nicht gebrauchten Zustand in einer Stellung verschieben, in welcher der Anhänger insgesamt verkürzt ist. In der Folge lässt sich der Anhänger mit einem reduzierten Raumbedarf verstauen, parken und dergleichen. Darüber hinaus lässt sich der Anhänger auf die beschriebene Art und Weise vereinfacht zwischen der besagten Stellung für das Verstauen, nachfolgend auch als Verstaustellung bezeichnet, und der auseinandergezogenen Stellung, nachfolgend auch als Gebrauchsstellung bezeichnet, verschieben. Insgesamt ist somit die Handhabung des Anhängers sowohl beim Verstellen zwischen den Stellungen als auch beim Verstauen vereinfacht.

Dem Erfindungsgedanken entsprechend weist der Anhänger das Fahrgestell sowie die Deichsel auf. Die Deichsel folgt dem Fahrgestell in einer Richtung, die nachfolgend auch als X-Richtung bezeichnet wird. Das Fahrgestell weist zumindest einen Träger auf, der in X-Richtung verläuft und nachfolgend auch als Gestellträger bezeichnet wird. Die Deichsel weist für den zumindest einen Gestellträger wenigstens einen zugehörigen Träger auf, der mit dem zugehörigen Gestellträger verbunden ist. Der zumindest eine Träger der Deichsel wird nachfolgend auch als Deichselträger bezeichnet. Erfindungsgemäß sind zumindest einer der Gestellträger und der zugehörige zumindest eine Deichselträger über eine zugehörige Führungsanordnung miteinander verbunden. Die zumindest eine Führungsanordnung ist derart ausgestaltet, dass der Anhänger über die zumindest eine Führungsanordnung zwischen der Gebrauchsstellung und der Verstaustellung verstellbar ist. Hierbei ist die Deichsel in der Gebrauchsstellung in X-Richtung weg vom Trägerrahmen und in der Verstaustellung in X-Richtung hin zum Trägerrahmen verstellt. Der Anhänger weist ferner eine Sicherungsvorrichtung auf, welche derart ausgestaltet ist, dass sie den Anhänger in einem Sicherungszustand in der Gebrauchsstellung sichert. Das heißt, dass die Sicherungsvorrichtung in der Gebrauchsstellung und im Sicherungszustand das Verstellen des Anhängers in die Verstaustellung blockiert bzw. verhindert. Die Sicherungsvorrichtung ist hierbei zwischen dem Sicherungszustand und einem Zustand verstellbar, der nachfolgend auch als Verstellzustand bezeichnet wird. Im Verstellzustand ist die Sicherung gelöst, sodass sich der Anhänger zwischen der Gebrauchsstellung und der Verstaustellung verstellen lässt.

Die X-Richtung des Anhängers ist zweckmäßig in der Gebrauchsstellung die Fahrtrichtung des Anhängers. Insbesondere verläuft die X-Richtung quer zu einer Y-Richtung, in welcher Räder des Anhängers einander gegenüberliegend angeordnet sein können. Der Anhänger weist also zweckmäßig zumindest zwei Räder auf, mit denen der Anhänger beim Gebrauch über einen Untergrund, insbesondere auf einer Straße, rollt. Zumindest zwei dieser Räder sind dabei in Y-Richtung zueinander beabstandet. Vorzugsweise sind die Räder mit dem Fahrgestell verbunden.

Jeweils zumindest zwei Räder können hierbei einer Radachse des Anhängers zugehörig sein. Der Anhänger kann hierbei einachsig sein, also lediglich eine Radachse mit zumindest zwei Rädern aufweisen. Der Anhänger kann auch mehrachsig sein, also zwei oder mehr parallel zur Y-Richtung verlaufende Radachsen mit jeweils zumindest zwei Rädern aufweisen.

Es versteht sich, dass der jeweilige Gestellträger des Trägerrahmens nicht zwangsläufig tragender Bestandteile des Fahrgestells bildet. Vorstellbar ist es insbesondere, die zumindest einer der wenigstens einen Gestellträger primär und/oder ausschließlich für die zumindest eine Führungsanordnung einzusetzen.

Vorstellbar ist es, für einen der zumindest einen Gestellträger zwei zugehörige Deichselträger vorzusehen, welche auf in Y-Richtung voneinander abgewandten Seiten des Gestellträgers angeordnet und jeweils mit dem Gestellträger, insbesondere über eine gemeinsame Führungsanordnung oder jeweils eine zugehörige Führungsanordnung, verbunden sind.

Das Verstellen des Anhängers von zwischen der Gebrauchsstellung und der Verstaustellung erfolgt vorzugsweise manuell durch einen Benutzer. Das heißt, dass der Anhänger vorzugsweise keinen Antrieb aufweist, der im Betrieb den Anhänger zwischen der Gebrauchsstellung und der Verstaustellung verstellt. Vorstellbar ist es aber auch, einen solchen Antrieb, beispielswese einen Elektromotor zum maschinellen Verstellen des Anhängers zwischen der Gebrauchsstellung und der Verstaustellung vorzusehen.

Vorteilhaft weist der Trägerrahmen zwei Gestellträger auf, welche in Y-Richtung zueinander beabstandet sind. Bevorzugt ist es zudem, wenn für den jeweiligen Gestellträger ein zugehöriger Deichselträger vorgesehen ist. Besonders bevorzugt ist der jeweilige Deichselträger über eine zugehörige Führungsanordnung mit dem zugehörigen Gestellträger verbunden. Somit wird eine mechanisch stabile Ausbildung des Anhängers bei zugleich vereinfachter Handhabung erreicht.

Die Deichsel kann prinzipiell eine solche beliebiger Art sein. Die Deichsel kann beispielsweise einen einzigen Deichselträger aufweisen.

Bei der Deichsel handelt es sich vorzugsweise um eine V-Deichsel, die zwei Deichselträger aufweist, welche relativ zueinander V-förmige angeordnet sind. Dabei ist bevorzugt der jeweilige Deichselträger mit einem zugehörigen den Gestellträger verbunden.

Bevorzugt ist es, wenn die Deichsel in der Verstaustellung in X-Richtung im Wesentlichen in das Fahrgestell verschoben ist. Insbesondere kann in der Verstaustellung lediglich ein Kupplungskörper der Deichsel zum Anbringen des Anhängers an einem Kraftfahrzeug das Fahrgestell in X-Richtung überragen oder auf Höhe des Fahrgestells angeordnet sein. Mit anderen Worten, in der Verstaustellung ist der Anhänger im Vergleich zur Gebrauchsstellung im Wesentlichen um die in X-Richtung verlaufende und das Fahrgestell überragende Länge der Deichsel verkürzt.

Vorteilhaft ist es, wenn die Deichsel in der Gebrauchsstellung in X-Richtung im Wesentlichen aus dem Fahrgestell ragt.

Der Trägerrahmen trägt im Gebrauch des Anhängers vorzugsweise eine Last. Hierzu weise der Anhänger eine Ladefläche auf. Insbesondere kann eine Plattform zum Tragen der Last, der die Ladefläche zumindest teilweise bildet vom Trägerrahmen getragen und/oder der Trägerrahmen Bestandteil der Plattform sein.

Beim Anhänger kann es sich sowohl um einen gebremsten als auch um einen ungebremsten Anhänger handeln.

Vorstellbar ist es, zumindest eine der wenigstens einen Führungsanordnungen durch ein verstellbares und geführtes Aufnahmen einer der Träger im zugehörigen Träger, beispielsweise durch eine Aufnahme des Deichselträgers im Gestellträger, zu realisieren.

Bei bevorzugten Ausführungsformen weist zumindest eine der zumindest einen Führungsanordnung in einem der zugehörigen Träger, das heißt im zugehörigen Gestellträger oder dem zugehörigen Deichselträger, zumindest eine in X Richtung verlaufende Führung und am anderen zugehörigen Träger, das heißt im zugehörigen Deichselträger oder im zugehörigen Gestellträger, zumindest ein in wenigstens einer der Führung geführtes Führungselement auf. Somit ist eine vereinfachte Ausbildung der Führungsanordnung gegeben. Darüber hinaus lässt sich der Anhänger auf diese Weise vereinfacht zwischen der Gebrauchsstellung und der Verstaustellung verstellen.

Vorstellbar ist es, zumindest eine Führung und das zugehörige Führungselement als eine Schiene und eine Nut auszubilden. Insbesondere kann die zugehörige Führungsanordnung in der Art einer Schubladenführung realisiert sein.

Denkbar ist es auch, zumindest eine Führung ein Langloch und das zugehörige Führungselement als Bolzen, Stift, Rolle und dergleichen auszubilden, der/die im Langloch geführt ist.

Die jeweilige Führung weist in X-Richtung hin zur Deichsel ein Ende auf, welches nachfolgend auch als Frontende bezeichnet wird.

Vorteilhaft bildet das Frontende wenigstens einer der zumindest einen Führung für zumindest eines der wenigstens einen zugehörigen Führungselement in der Gebrauchsstellung einen Anschlag. Somit ist eine klare Definition der Gebrauchsstellung erreicht. Zudem lässt sich der Anhänger auf diese Weise vereinfacht handhaben.

Die jeweilige Führung weist in X-Richtung weg von der Deichsel ein Ende auf, welches nachfolgend auch als Rückende bezeichnet.

Vorzugsweise bildet das Rückende wenigstens einer der zumindest einen Führung für wenigstens ein der zumindest einen zugehörigen Führungselement in der Verstaustellung einen Anschlag. Somit ist die Verstaustellung auf einfache Weise definiert und/oder begrenzt. Zudem lässt sich der Anhänger auf diese Weise vereinfacht handhaben.

Erfindungsgemäß ist zumindest eine der wenigstens einen Führungsanordnung derart ausgestaltet, dass beim Verstellen des Anhängers von der Gebrauchsstellung in die Verstaustellung zusätzlich zum relativen Verstellen der Deichsel in X-Richtung eine Neigung bzw. ein Kippen der Deichsel relativ zum Trägerrahmen um eine parallel zur Y-Richtung verlaufenden Kippachse erfolgt. Somit ist es möglich, die Deichsel auf der von der Ladefläche abgewandten Seite des Trägerrahmens anordnen. Dies führt zu einer weiteren Reduzierung des benötigten Raums in der Verstaustellung. Bevorzugt ist es dabei, wenn das Kippen der Deichsel um die Kippachse beim Verstellen in die Verstaustellung zu Beginn des Verstellvorgangs vom der Gebrauchsstellung in die Verstaustellung erfolgt. Somit wird die Handhabung des Anhängers weiter verbessert.

Das Neigen bzw. Kippen um die Kippachse kann dadurch realisiert sein, dass zumindest eine der wenigstens einen Führungsanordnung, vorteilhaft die jeweilige Führungsanordnung, eine obere Führung und eine zur oberen Führung beabstandete untere Führung auf. Vorzugsweise sind die obere Führung und die untere Führung am selben Träger vorgesehen. Die Führungsanordnung weist ferner für die jeweilige Führung zumindest ein zugehöriges Führungselement auf. Die untere Führung weist einen Grundabschnitt auf, der in einer quer zur X-Richtung und quer zur Y-Richtung verlaufenden Z-Richtung zur oberen Führung beabstandet verläuft. Insbesondere ist der Grundabschnitt in Z-Richtung beim Gebrauch des Anhängers unterhalb der oberen Führung angeordnet. Die untere Führung weist ferner einen auf den Grundabschnitt in X-Richtung hin zur Deichsel folgenden Endabschnitt mit dem Frontende der unteren Führung auf. Dabei sind die Frontenden der oberen Führung und der unteren Führung in Z-Richtung auf gleicher Höhe angeordnet. Zudem ist das Frontende der unteren Führung in X-Richtung zum Frontende der oberen Führung hin zur Deichsel beabstandet. Der Endabschnitt der unteren Führung bildet somit einen Übergang zwischen dem Grundabschnitt und dem Frontende der unteren Führung, welche in Z-Richtung zueinander beabstandet sind. Der Grundabschnitt verläuft somit entlang der Z-Richtung, bevorzugt geneigt zur Z-Richtung. Auf diese Weise lässt sich die Deichsel beim Verstellen in die Verstaustellung über den Endabschnitt in Z-Richtung nach unten neigen, das heißt um die parallel zur Y-Richtung verlaufende Kippachse kippen. Anschließend lässt sich die Deichsel über den Grundabschnitt und die obere Führung in X-Richtung hin zum Trägerrahmen und somit in die Verstaustellung verstellen. Dies ermöglicht ein besonders einfaches Verstellen des Anhängers zwischen der Gebrauchsstellung und der Verstaustellung. Darüber hinaus führt dies zu einer Reduzierung des benötigten Raums in der Verstaustellung. Insbesondere kann die Deichsel auf diese Weise in Z-Richtung auf der von der Ladefläche abgewandten Seite des Trägerrahmens anordnen.

Die jeweilige zumindest eine Führung kann prinzipiell beliebig offen sein. Das heißt, dass das zugehörige zumindest eine Führungselement in einer beliebigen Richtung in die Führung greifen kann.

Bevorzugt sind Ausführungsformen, bei denen zumindest eine der wenigstens einen Führung, vorteilhaft die jeweilige Führung, in Y-Richtung offen ist. Das heißt, dass Ausführungsformen bevorzugt sind, bei denen das zumindest eine Führungselement, vorzugsweise des jeweilige Führungselement, in Y-Richtung in die zugehörige Führung greift. Dies erlaubt eine vereinfachte und robuste Ausbildung des Anhängers. Vorteilhaft sind hierbei Ausführungsformen, bei denen die zumindest eine Führung in Y-Richtung wenigstens nach innen offene ist.

Prinzipiell kann der Anhänger für lediglich einen der Deichselträger und den zugehörigen Gestellträger eine zugehörige Führungsanordnung aufweisen.

Bevorzugt weist die Sicherungsvorrichtung eine Verbindung auf, welche die Deichsel im Sicherungszustand relativ zum Tragerahmen fixiert und derart ausgestaltet ist, dass sie beim Fixieren den Anhänger in die Gebrauchsstellung, insbesondere zu zumindest einen der Anschläge, verstellt. Vereinfacht lässt sich dies durch zumindest eine lösbare Schraubverbindung realisieren, bei welcher beim Anziehen der Schraube der Anhänger in die Gebrauchsstellung gezogen und zum Anschlagen gebracht wird.

Vorteilhaft ist die Verbindung der Sicherungsvorrichtung durch einen Spannverschluss realisiert, der die Deichsel im Sicherungszustand lösbar relativ zum Trägerrahmen fixiert. Auf diese Weise ist eine einfache und effektive Umsetzung der Sicherungsvorrichtung gegeben. Der Spannverschluss weist hierbei einerseits einen Haken und andererseits einen Ring und einen Klappverschluss auf. Hierbei ist der Ring offen, muss jedoch nicht zwangsläufig kreisförmig verlaufen. Der Haken ist am Fahrgestell, insbesondere am Trägerrahmen, oder an der Deichsel angebracht. Dementsprechend sind der Klappverschluss und der Ring entweder an der Deichsel oder am Fahrgestell, insbesondere am Trägerrahmen, angebracht. Das heißt, dass der Spannverschluss am Fahrgestell, insbesondere am Trägerrahmen, den Haken und an der Deichsel den Klappverschluss und den Ring aufweist, oder dass der Spannverschluss am Fahrgestell, insbesondere am Trägerrahmen, den Klappverschluss und den Ring und an der Deichsel den Haken aufweist. Im Sperrzustand hintergreift der Haken den Ring, wobei der Klappverschluss den Ring gegen den Haken verspannt. Dieses Vorspannen kann über den Klappverschluss gelöst werden. Mit dem Spannverschluss erfolgt insbesondere ein kraftschlüssiges Sichern des Anhängers in der Gebrauchsstellung. Über ein Lösen und Schließen des Klappverschlusses ist es ferner möglich, die Deichsel um die Kippachse zu kippen, insbesondere entlang des Endabschnitts der zumindest einen Führung zu bewegen. Somit ist die Handhabung des Anhängers weiter verbessert.

Vorteilhaft ist der Spannverschluss fahrgestellseitig an einer in X-Richtung der Deichsel zugewandten Stirnseite des Fahrgestells realisiert. Das heißt, dass der Haken an der Stirnseite angeordnet ist, oder dass der Ring und der Klappverschluss an der Stirnseite angeordnet sind. Somit ist die Handhabung des Spannverschlusses vereinfacht. Darüber hinaus ist auf diese Weise der Verstellweg zwischen der Gebrauchsstellung und der Verstaustellung vergrößert. Folglich braucht der Anhänger in der Gebrauchsstellung einen weiter reduzierten Raum.

Zum fahrgestellseitigen Vorsehen des Spannverschlusses an der Stirnseite kann das Fahrgestell an der Stirnseite einen in Y-Richtung Rahmenkörper aufweisen. Das heißt, dass der Haken am Rahmenkörper angebracht ist, oder dass der Ring und der Klappverschluss am Rahmenkörper angebracht sind. Der Rahmenkörper kann dabei Bestandteil einer die Ladefläche umgebenden Rahmenstruktur sein.

Bevorzugt ist der Spannverschluss deichselseitig zu einer dem Trägerrahmen in X-Richtung zugewandten Stirnseite der Deichsel beabstandet umgesetzt. Weist die Deichsel zwei Deichselträger auf, ist der Spannverschluss vorzugsweise deichselseitig zwischen den Deichselträgern realisiert. Auf diese Weise lässt sich die Deichsel in der Verstaustellung weiter in den Trägerrahmen hinein verschieben, sodass der Anhänger in der Verstaustellung weniger Raum benötigt.

Vorzugsweise weist die Deichsel eine zwischen den Deichselträgern angeordnete Platte auf, an welchem der Spannverschluss deichselseitig vorgesehen ist. Das heißt, dass der Ring und der Klappverschluss an der Platte angebracht sind, oder dass der Haken an der Platte angebracht ist. Dies führt zu einer einfachen und stabilen Realisierung des Spannverschlusses, insbesondere des Sicherungszustandes.

Es versteht sich, dass die Sicherungsvorrichtung auch zwei oder mehr solche Spannverschlüsse aufweisen kann.

Bei bevorzugten Ausführungsformen weist die Sicherungsvorrichtung einen Bolzen auf, der im Sicherungszustand lösbar durch zumindest einen der wenigstens einen Gestellträger und wenigstens einen der zumindest einen Deichselträger geführt ist. Der Bolzen, nachfolgend auch als Sicherungsbolzen bezeichnet, sichert also im Sicherungszustand den Anhänger formschlüssig gegen ein Verstellen zwischen der Gebrauchsstellung und der Verstaustellung. Somit erfolgt eine einfache und effiziente Ausbildung der Sicherungsvorrichtung.

Zweckmäßig weisen wenigstens einer der zumindest einen Gestellträger und wenigstens einer der zumindest einen Deichselträger für den zugehörigen Sicherungsbolzen jeweils zugehörige Öffnungen, insbesondere Löcher auf, durch welche der Sicherungsbolzen im Sicherungszustand geführt ist. Im Sicherungszustand sind diese Öffnungen also fluchtend zueinander angeordnet, wobei der Sicherungsbolzen durch die Öffnungen geführt ist.

Vorteilhaft ist der Sicherungsbolzen in Y-Richtung durch den zugehörigen zumindest einen Gestellträger und zumindest einen Deichselträger geführt. Somit ist eine einfache Handhabung der Sicherungsvorrichtung und somit des Anhängers gegeben.

Es versteht sich, dass die Sicherungsvorrichtung auch zwei oder mehr solche Sicherungsbolzen aufweisen kann, wobei der jeweilige Sicherungsbolzen im Sicherungszustand durch zumindest einen der Gestellträger und zumindest einen Deichselträger geführt ist.

Prinzipiell kann der Anhänger zum Verstauen bzw. zum Lagern bzw. zum Parken lediglich in die Verstaustellung verstellt werden.

Bei einer vorteilhaften Weiterbildung weist der Anhänger neben dem Fahrgestell bzw. der Plattform, die nachfolgend auch als vordere Plattform bezeichnet wird, eine weitere Plattform auf, die nachfolgend auch als hintere Plattform bezeichnet wird. Die hintere Plattform bildete im Gebrauch des Anhängers eine Ladefläche des Anhängers. Insbesondere bilden die vordere und die hintere Plattform im Gebrauch gemeinsam die Ladefläche Anhängers. Dabei ist die hintere Plattform im Gebrauch des Anhängers in X-Richtung auf der von der Deichsel abgewandten Seite des Trägerrahmens bzw. der vorderen Plattform angeordnet.

Bevorzugt sind die hintere Plattform und die vordere Plattform relativ zueinander um eine parallel zur Y-Richtung verlaufende Klappachse klappbar. Das heißt, dass sich die hintere Plattform und die vordere Plattform zwischen einem Gebrauchszustand und einem Klappzustand klappen lassen, wobei im Klappzustand eine Ladefläche der hinteren Plattform hin zum vorderen Plattform geklappt ist, insbesondere auf der Ladefläche der vorderen Plattform zumindest teilweise aufliegt. Demgegenüber folgt die Ladefläche der hinteren Plattform im Gebrauchszustand der Ladefläche der vorderen Plattform in X-Richtung.

Die Klappachse ist bevorzugt zur Kippachse im Gebrauchszustand insbesondere in X-Richtung beabstandet.

Zweckmäßig ist ein unbeabsichtigtes Verstellen zwischen dem Gebrauchszustand und dem Klappzustand gesichert. Zu diesem Zweck kann der Anhänger entsprechende Sicherungsmechanismen aufweisen.

Eine besonders bauraumsparendes Lagern, Aufbewahren, Verstauen, Parken und dergleichen des Anhängers lässt sich dabei in einem Verstauzustand realisieren, in welchem der Anhänger in die Verstaustellung und in den Klappzustand verstellt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine isometrische Ansicht eines Anhängers in einer Gebrauchsstellung,
- Fig. 2: eine isometrische Ansicht des Anhängers in einer Verstaustellung,
- Fig. 3: eine isometrische Detailansicht des Anhängers in der Gebrauchsstellung,
- Fig. 4: eine seitliche isometrische Ansicht des Anhängers in der Gebrauchsstellung bei einem anderen Ausführungsbeispiel,
- Fig. 5: eine seitliche, isometrische Ansicht des Anhängers in einem Klappzustand und in der Gebrauchsstellung,
- Fig. 6: eine seitliche isometrische Ansicht des Anhängers im Klappzustand und in der Gebrauchsstellung,
- Fig. 7: eine seitliche isometrische Ansicht des Anhängers im Klappzustand und in der Verstaustellung,
- Fig. 8: eine isometrische Ansicht des Anhängers im Klappzustand und in der Verstaustellung.

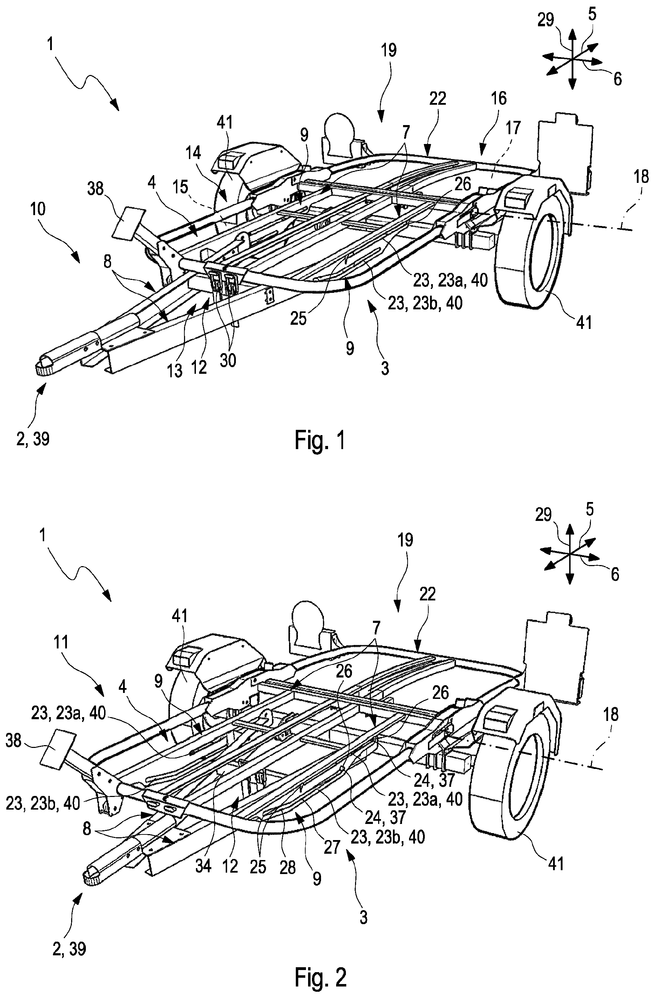

Ein Anhänger 1, wie er beispielsweise in den Figuren 1 bis 8 gezeigt ist, weist eine Deichsel 2 sowie ein Fahrgestell 3 auf. Das Fahrgestell 3 ist in den Figuren zum besseren Verständnis nicht gänzlich, sondern lediglich mit einer Grundstruktur dargestellt.

Das Fahrgestell 3 weist einen Trägerrahmen 4 auf. Hierbei folgt die Deichsel 2 dem Trägerrahmen 4 in einer Richtung 5, welche nachfolgend auch als X-Richtung 5 bezeichnet wird. Der Trägerrahmen 4 weist zumindest einen in X-Richtung 5 verlaufenden Träger 7 auf, der nachfolgend auch als Gestellträger 7 bezeichnet wird. In den gezeigten Ausführungsbeispielen weist der Trägerrahmen 4 zwei Gestellträger 7 auf, welche in einer quer zur X-Richtung 5 verlaufenden Richtung 6, nachfolgend auch als Y-Richtung 6 bezeichnet, zueinander beabstandet sind und sich parallel erstrecken. Die Deichsel 2 weist für zumindest einen der wenigstens einen Gestellträger 7 zumindest einen zugehörigen Träger 8 auf, der mit dem zugehörigen zumindest einen Gestellträger 7 verbunden ist und nachfolgend auch als Deichselträger 8 bezeichnet wird. In den gezeigten Ausführungsbeispielen weist die Deichsel 2 für den jeweiligen Gestellträger 7 einen zugehörigen Deichselträger 8 auf. In den gezeigten Ausführungsbeispielen ist die Deichsel 2 dabei als eine sogenannte V-Deichsel 39 ausgebildet bei der die Deichselträger 8 welche V-förmig angeordnet sind.

Der Anhänger 1 weist für zumindest einen der wenigstens einen Gestellträger 7 und wenigstens einen der zumindest einen Deichselträger 8 eine Führungsanordnung 9 auf. In den gezeigten Ausführungsbeispielen weist der Anhänger 1 für den jeweiligen Deichselträger 8 und den zugehörigen Gestellträger 7 eine zugehörige Führungsanordnung 9 auf. Die zumindest eine Führungsanordnung 9 ist derart ausgestaltet, dass die Deichsel 2 relativ zum Trägerrahmen 4 und somit relativ zum Fahrgestell 3 in X-Richtung 5 zwischen einer in den Figuren 1 sowie 3 bis 6 dargestellten Gebrauchsstellung 10 und einer in den Figuren 2 sowie 7 und 8 dargestellten Verstaustellung 11 verstellbar ist. In der Verstaustellung 11 ist die Deichsel 2 in X-Richtung 5 hin zum Trägerrahmen 4 verstellt, insbesondere in das Fahrgestell 3 geschoben. In der Gebrauchsstellung 10 ist die Deichsel 2 in X-Richtung 5 vom Trägerrahmen 4 weg verstellt, insbesondere aus dem Fahrgestell 3 gezogen. Der Anhänger 1 weist ferner eine Sicherungsvorrichtung 12 auf, welche in einem in den Figuren 1 sowie 3 bis 6 gezeigten Sicherungszustand 13 den Anhänger 1 in der Gebrauchsstellung 10 sichert, das heißt ein Verstellen des Anhängers 1 von der Gebrauchsstellung 10 in die Verstaustellung 11 verhindert.

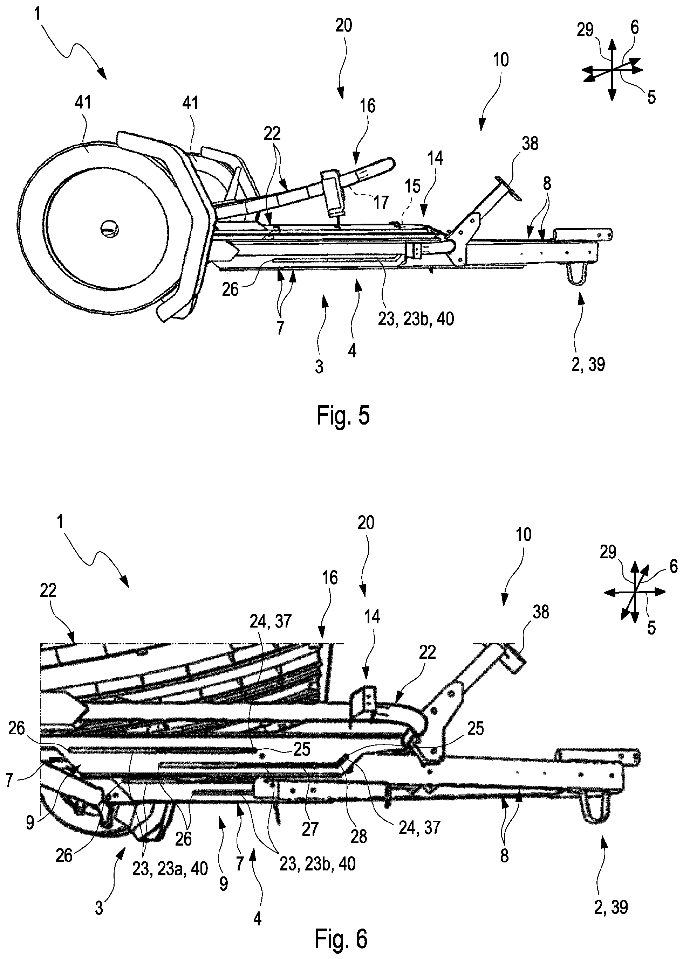

Der Trägerrahmen 4 ist in den gezeigten Ausführungsbeispielen Bestandteil einer Plattform 14, die eine in den Figuren nicht sichtbare Ladefläche 15 aufweist. In den gezeigten Ausführungsbeispielen weist das Fahrgestell 3 neben der Plattform 14, welche nachfolgend auch als vordere Plattform 14 bezeichnet wird, eine weitere Plattform 16 auf, die nachfolgend auch als hintere Plattform 16 bezeichnet wird. Die hintere Plattform 16 weist eine weitere Ladefläche 17 des Anhängers 1 auf, welche nachfolgend auch als hintere Ladefläche 17 bezeichnet wird. Demgegenüber wird die Ladefläche 15 der vorderen Plattform 14 nachfolgend auch als vordere Ladefläche 15 bezeichnet. Die Plattformen 14, 16 sind relativ zueinander um eine parallel zur Y-Richtung 6 verlaufende Klappachse 18 (siehe Figuren 1 und 2) klappbar. Somit ist der Anhänger 1 zwischen einem in den Figuren 1 bis 4 dargestellten Gebrauchszustand 19 und einem in den Figuren 5 bis 8 dargestellten Klappzustand 20 verstellbar. Im Gebrauchszustand 19 ist die vordere Plattform 14 in X-Richtung 5 zwischen der Deichsel 2 und der hinteren Plattform 16 angeordnet. Hierbei folgt die hintere Ladefläche 17 im Gebrauchszustand 19 der vorderen Ladefläche 15. Im Klappzustand 20 sind die Ladeflächen 15, 17 durch einen Klappen um die Klappachse 18 aufeinander zugeklappt, liegen insbesondere einander gegenüber.

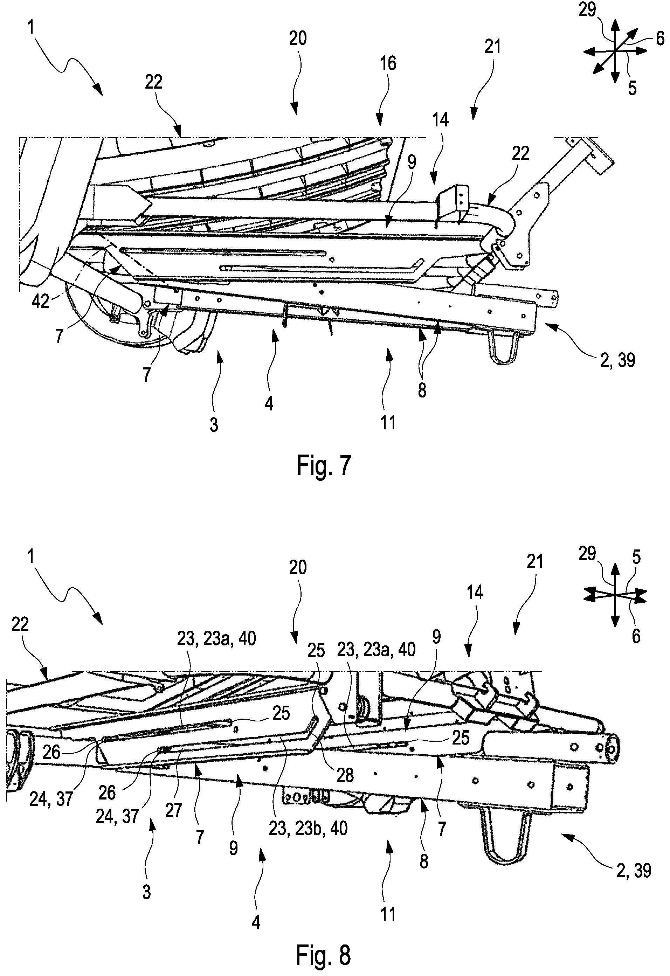

Der Anhänger 1 lässt sich in der Verstaustellung 11 mit reduziertem Raumbedarf lagern, parken und dergleichen. Der Raumbedarf des Anhängers 1 beim Lagern, Parken und dergleichen wird weiter reduziert, wenn der Anhänger 1 zudem in den Klappzustand 20 verstellt ist. Dementsprechend ist der Anhänger in einem in den Figuren 7 und 8 gezeigten Verstauzustand 21 in die Verstaustellung 11 und in den Klappzustand 20 verstellt.

In den gezeigten Ausführungsbeispielen sind die Gestellträger 7 in Y-Richtung 6 nicht außenseitig des Fahrgestell 3 angeordnet. Das heißt, dass die Gestellträger 7 in Y-Richtung 6 nach innen versetzt angeordnet sind. Wie den Figuren ferner entnommen werden kann, weist das Fahrgestell 3 der gezeigten Ausführungsbeispiele eine umlaufende Rahmenstruktur 22 auf, welche sich über beide Plattformen 14,16 erstreckt und zum Klappen der Plattformen 14,16 relativ zueinander entsprechend ausgestaltet ist.

In den gezeigten Ausführungsbeispielen weist der Anhänger 1 für den jeweiligen Deichselträger 8 und den zugehörigen Gestellträger 7 eine zugehörige Führungsanordnung 9 auf. Das heißt, dass der Anhänger 1 insgesamt zwei Führungsanordnung 9 aufweist.

In den gezeigten Ausführungsbeispielen weist die jeweilige Führungsanordnung 9 zumindest eine Führung 23 und für die zumindest eine Führung 23 wenigstens ein Führungselement 24 auf. Hierbei ist das jeweilige zumindest eine Führungselement 24 in der zugehörigen Führung 23 geführt, um das Verstellen des Anhängers 1 zwischen der Gebrauchsstellung 10 und der Verstaustellung 11 zu realisieren. In den gezeigten Ausführungsbeispielen ist dabei die zumindest eine Führung 23 in einem der zugehörigen Träger 7, 8 und das zumindest eine Führungselement 24 am anderen zugehörigen Träger 7, 8 vorgesehen. Hierbei ist in den gezeigten Ausführungsbeispielen die zumindest eine Führung 23 im zugehörigen Gestellträger 7 ausgebildet und das zumindest eine zugehörige Führungselement 24 am zugehörigen Deichselträger 8 angebracht. In den gezeigten Ausführungsbeispielen ist die jeweilige Führung 23 zudem in Y-Richtung 6 offen.

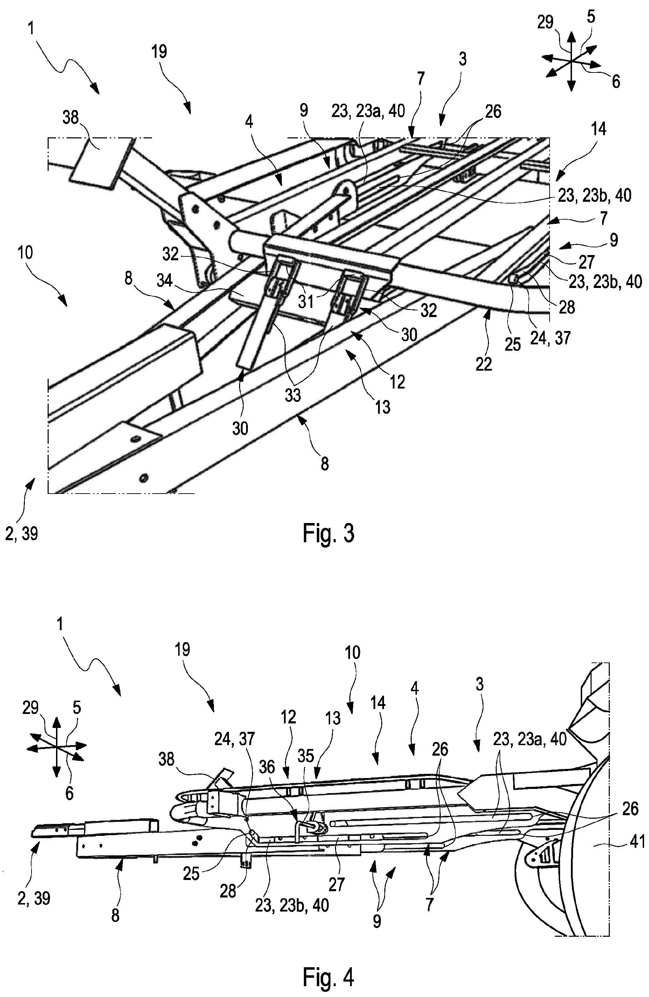

In den gezeigten Ausführungsbeispielen ist die jeweilige Führung 23 als ein Langloch 40 ausgebildet. Die jeweilige Führung 23 erstreckt sich hierbei zumindest teilweise in X-Richtung 5 und weist in X-Richtung 5 hin zur Deichsel 2 ein Ende 25 auf, welches nachfolgend auch als Frontende 25 bezeichnet wird. Die jeweilige Führung 23 weist ferner in X-Richtung 5 zum Frontende 25 beabstandet ein weiteres Ende 26 auf, welches nachfolgend auch als Rückende 26 bezeichnet wird. Das Frontende 25 zumindest einer der wenigstens einen Führung 23 bildet bevorzugt für eines der wenigstens einen zugehörigen Führungselement 24 in der Gebrauchsstellung 10 einen Anschlag, wie insbesondere Figur 4 entnommen werden kann. In den gezeigten Ausführungsbeispielen bildet das jeweilige Frontende 25 der jeweiligen Führung 23 für das zugehörige Führungselement 24 in der Gebrauchsstellung 10 einen Anschlag. Analog hierzu bildet das Rückende 26 zumindest einer der wenigstens einen Führung 23 für eines der wenigstens einen zugehörigen Führungselement 24 in der Verstaustellung 11 einen Anschlag. In den gezeigten Ausführungsbeispielen bildet des Rückende 26 der jeweiligen Führung 23 für das zugehörige Führungselement 24 in der Verstaustellung 11 einen Anschlag.

In den gezeigten Ausführungsbeispielen ist das jeweilige Führungselement 24 beispielhaft als ein in der zugehörigen Führung 23 geführter, in Y-Richtung 6 abstehender Führungsstift 37 ausgebildet.

In den gezeigten Ausführungsbeispielen weist die jeweilige Führungsanordnung 9 zwei zueinander beabstandete Führungen 23 auf. Eine der Führungen 23, die nachfolgend auch als obere Führung 23a bezeichnet wird, erstreckt sich hierbei vom Rückende 26 bis zum Frontende 25 in X-Richtung 5. Die andere Führung 23, nachfolgend auch als untere Führung 23b bezeichnet, weist einen Grundabschnitt 27 und einen Endabschnitt 28 auf. Der Grundabschnitt 27 ist in einer quer zur X-Richtung 5 und quer zur Y-Richtung 6 verlaufenden Z-Richtung 29 unterhalb der oberen Führung 23 a angeordnet und erstreckt sich in X-Richtung 5. Der Grundabschnitt 27 weist dabei das Rückende 26 der unteren Führung 23b auf. Der Endabschnitt 28 folgt dem Grundabschnitt 27 in X-Richtung 5 hin zur Deichsel 2. Der Endabschnitt 28 weist das Frontende 25 der unteren Führung 23b auf. Hierbei ist das Frontende 25 der unteren Führung 23b in Z-Richtung 29 auf Höhe des Frontendes 25 der oberen Führung 23a und zum Frontende 25 der oberen Führung 23 a in X-Richtung 5 hin zur Deichsel 2 beabstandet angeordnet. In X-Richtung 5 folgt also das Frontende 25 der unteren Führung 23b dem Frontende 25 der oberen Führung 23a und ist zu diesem beabstandet. Folglich verläuft der Endabschnitt 28 geneigt zur X-Richtung 5 und geneigt zur Z-Richtung 29. Über einen derartigen Verlauf der Führungen 23 ist es möglich, die Deichsel 2 beim Verstellen von der Gebrauchsstellung 10 in die Verstaustellung 11 zunächst in Z-Richtung 29 nach unten und in X-Richtung 5 hin zum Trägerrahmen 4 zur verstellen. Auf diese Weise wird die Deichsel 2 also zunächst um eine parallel zur Y-Richtung 6 verlaufenden Kippachse 42 (siehe Figur 7) die im Bereich des Rücksendes 26 der oberen Führung 23a verläuft, nach unten gekippt und anschließend in X Richtung 5 hin zum Trägerrahmen 4 in die Verstaustellung 11 verstellt. Dies erlaubt eine einfache Verstellung zwischen der Gebrauchsstellung 10 und der Verstaustellung 11. Ferner wird die Deichsel 2 auf diese Weise beim Verstellen in die Verstaustellung 11 vereinfacht auf der von der vorderen Ladefläche 15 abgewandten Seite des Trägerrahmens 4 verstellt. Folglich sind der Raumbedarf des Anhängers 1 in der Verstaustellung 11 weiter reduziert und die Handhabung des Anhängers 1 verbessert. Zum Verstellen des Anhängers 1 von der Verstaustellung 11 in die Gebrauchsstellung 10 wird in umgekehrter Weise die Deichsel 2 zunächst in X Richtung 5 weg vom Trägerrahmen 4 bewegt. Erreicht das der jeweiligen unteren Führung 23b zugehörige Führungselement 24 den Endabschnitt 28, so wird die Deichsel 2 relativ zum Trägerrahmen 4 um die Kippachse 42 nach oben und in X-Richtung 5 weiter vom Trägerrahmen 4 und in die Gebrauchsstellung 10 verstellt.

Die Sicherungsvorrichtung 12 weist in den gezeigten Ausführungsbeispielen zwei Spannverschlüsse 30 auf. Der jeweilige Spannverschluss 30 fixiert dabei in der Gebrauchsstellung 10 die Deichsel 2 lösbar und kraftschlüssig am Fahrgestell 3 und somit relativ zum Trägerrahmen 4. Der jeweilige Spannverschluss 30 weist einerseits einen Haken 31 und andererseits einen Ring 32 sowie einen am Ring 32 angebrachten Klappverschluss 33 auf. Unter Ring 32 ist hierbei nicht zwangsläufig ein kreisförmiger Körper zu verstehen, wie insbesondere Figur 3 entnommen werden kann. In den gezeigten Ausführungsbeispielen ist der jeweilige Haken 31 am Fahrgestell 3 angebracht, wohingegen der Ring 32 und der Klappverschluss 33 an der Deichsel 2 angebracht sind. Vorstellbar wäre aber auch eine umgekehrte Anordnung. In den gezeigten Ausführungsbeispielen ist der Haken 31 an einer in X-Richtung 5 der Deichsel 2 zugewandten Stirnseite des Fahrgestells 3 angeordnet. Die Stirnseite wird dabei von der Rahmenstruktur 22 gebildet, sodass der jeweilige Haken 31 an der Rahmenstruktur 22 angebracht ist. In den gezeigten Ausführungsbeispielen sind der jeweilige Ring 32 und der zugehörige Klappverschluss 33 zwischen den Deichselträgern 8 an der Deichsel 2 angebracht. Zu diesem Zweck weist die Deichsel 2 eine zwischen den Deichselträger 8 angeordnete, an den Deichselträger 8 befestigte, Platte 34 auf, an denen der jeweilige Klappverschluss 33 und zugehörige Ring 32 angebracht sind. Wie insbesondere Figur 3 entnommen werden kann, hintergreift der jeweilige Haken 31 im Sicherungszustand 13 den zugehörigen Ring 32 des zugehörigen Spannverschlusses 30, wobei der Ring 32 über den Klappverschluss 33 gegen den Haken 31 vorgespannt ist. Zum Lösen des jeweiligen Spannverschlusses 30 wird dabei der Klappverschluss 33 verstellt, um die Vorspannung zu lösen. Der jeweilige Spannverschlusses 30 erlaubt ferner beim den Ring 32 hintergreifenden Zustand des Hakens 31 durch das Verstellen des Klappverschluss 33 eine entsprechende Bewegung des jeweiligen Führungselement 24 entlang des Endabschnitt 28 und somit insbesondere vorstehend beschriebene Kippbewegung der Deichsel 2 relativ zum Fahrgestell 3 um die Kippachse 42. Insbesondere wird die Deichsel 2 beim Schließen der Klappverschlusses 33 entlang des Endabschnitts 28 der jeweiligen unteren Führung 23b in die Gebrauchsstellung 10 verstellt. Beim Lösen der Klappverschlüsse 33 erfolgt zudem, insbesondere gravitationsbedingt, ein Verstellen der Deichsel 2 entlang des jeweiligen Endabschnitts 28 hin zum zugehörigen Grundabschnitt 27.

Beim in Figur 4 gezeigten Ausführungsbeispiel weist die Sicherungsvorrichtung 12 einen Bolzen 35, nachfolgend auch als Sicherungsbolzen 35 bezeichnet, auf. Der Sicherungsbolzen 35 ist in der Gebrauchsstellung 10 und im Sicherungszustand 13, wie in Figur 4 gezeigt, durch wenigstens einen der Gestellträger 7 und wenigstens einen Deichselträger 8, vorzugsweise durch den zugehörigen Deichselträger 8, formschlüssig geführt. Somit verhindert der Sicherungsbolzen 35 ein Verstellen des Anhängers 1 von der Gebrauchsstellung 10 in die Verstaustellung 11 formschlüssig. Im gezeigten Ausführungsbeispiel weist die Sicherungsvorrichtung 12 einen einzigen solchen Sicherungsbolzen 35 auf, der durch einen der Gestellträger 7 und den zugehörigen Deichselträger 8 geführt ist. Dabei weisen der dem Sicherungsbolzen 35 zugehörige Gestellträger 7 und Deichselträger 8 für den Sicherungsbolzen 35 jeweils eine Öffnung (nicht sichtbar) auf, durch welche der Sicherungsbolzen 35 im Sicherungszustandes 13 formschlüssig geführt ist. Im gezeigten Ausführungsbeispiel und bevorzugt ist der Sicherungsbolzen 35 in Y-Richtung 6 durch den zugehörigen Gestellträger 7 und den zugehörigen Deichselträger 8 geführt. Im gezeigten Ausführungsbeispiel schließt am Sicherungsbolzen 35 ein abstehende Griff 36 an, sodass insgesamt ein den Sicherungsbolzen 35 und den Griff 36 aufweisendes Bauteil in der Art eines Schlüssels 36 ausgebildet ist.

Wie insbesondere den Figuren 1, 2 sowie 5 entnommen werden kann, weist der Anhänger 1 zwei in Y-Richtung 6 zueinander beabstandete Räder 41 auf, über welche der Anhänger 1 auf einem Untergrund abgestellt und bewegt werden kann. Hierbei ist in den gezeigten Ausführungsbeispielen die Klappachse 18, wie insbesondere den Figuren 1 und 2 entnommen werden kann, in X-Richtung 5 im Bereich der Räder 41 angeordnet.

Wie Figur 1 entnommen werden kann, entspricht die X-Richtung 5 in der Gebrauchsstellung 10, insbesondere zudem im Gebrauchszustand 19, einer Fahrtrichtung des Anhängers 1. In der Gebrauchsstellung 10 und im Gebrauchszustand 19 entspricht ferner die Z-Richtung 29 der Höhenrichtung und die Y-Richtung 6 der Breitenrichtung. Insbesondere entsprechen die genannten Richtungen 5, 6, 29 in der Gebrauchsstellung 10, insbesondere zudem im Gebrauchszustand 19, einem Fahrzeugkoordinatensystem.

Wie beispielsweise den Figuren 5 und 6 entnommen werden kann, weist der Anhänger 1 vorzugsweise einen Standfuß 38 auf, der in der Verstaustellung 11, vorzugsweise ferner im Klappzustand 20, das heißt vorzugsweise im Verstauzustand 21, dem Abstützen des Anhängers 1 auf einem Untergrund dient. Zu diesem Zweck ist der Standfuß 38 bevorzugt um eine parallel zur Y-Richtung 6 verlaufenden Schwenkachse (nicht gezeigt) schwenkbar. In den gezeigten Ausführungsbeispielen ist der Standfuß 38 dabei an einer der der Deichsel 2 zugewandten Stirnseite der Rahmenstruktur 22 angebracht.

## Patentansprüche

1. Anhänger (1) für ein Kraftfahrzeug,
- mit einem Fahrgestell (3), das einen Trägerrahmen (4) aufweist,
- mit einer mit dem Trägerrahmen (4) verbundenen Deichsel (2), welche in einer X-Richtung (5) auf den Trägerrahmen (4) folgt,
- wobei der Trägerrahmen (4) zumindest einen in X-Richtung (5) verlaufenden Gestellträger (7) aufweist,
- wobei die Deichsel (2) für zumindest einen der wenigstens einen Gestellträger (7) einen zugehörigen Deichselträger (8) aufweist, der mit dem zugehörigen Gestellträger (7) verbunden ist,
- wobei zumindest einer der wenigstens einen Deichselträger (8) und der zugehörige Gestellträger (7) über eine zugehörige Führungsanordnung (9) miteinander verbunden sind,
- wobei der Anhänger (1) über die zumindest eine Führungsanordnung (9) zwischen einer Gebrauchsstellung (10), in welcher die Deichsel (2) in X-Richtung (5) weg vom Trägerrahmen (4) verstellt ist, und einer Verstaustellung (11), in welcher die Deichsel (2) in X-Richtung (5) hin zum Trägerrahmen (4) verstellt ist, verstellbar ist,
- wobei der Anhänger (1) eine Sicherungsvorrichtung (12) aufweist, die zwischen einem Sicherungszustand (13), in welchem der Anhänger (1) in der Gebrauchsstellung (10) gesichert ist, und einem Verstellzustand, in welchem der Anhänger (1) zwischen der Gebrauchsstellung (10) und der Verstaustellung (11) verstellbar ist, verstellbar ist,
**dadurch gekennzeichnet,**
- **dass** wenigstens eine der zumindest einen Führungsanordnung (9) derart ausgestaltet ist, dass beim Verstellen des Anhängers (1) von der Gebrauchsstellung (10) in die Verstaustellung (11) zudem ein Kippen der Deichsel (2) relativ zum Trägerahmen (4) um eine quer zur X-Richtung (5) verlaufenden Kippachse (18) erfolgt.

2. Anhänger nach Anspruch 1,
**dadurch gekennzeichnet,**
**dass** zumindest eine der zumindest einen Führungsanordnung (9) in einem der zugehörigen Träger (7, 8) zumindest eine entlang der X-Richtung (5) verlaufende Führung (23) und am anderen zugehörigen Träger (7, 8) zumindest ein in wenigstens einer der Führung (23) geführtes Führungselement (24) aufweist.

3. Anhänger nach Anspruch 1 oder 2,
**dadurch gekennzeichnet,**
**dass** zumindest eine der wenigstens einen Führungsanordnung (9) zumindest eine Führung (23) aufweist, die in Y-Richtung (6) offen ist.

4. Anhänger nach einem der Ansprüche 1 bis 3,
**dadurch gekennzeichnet,**
- **dass** der Trägerrahmen (4) zwei in einer quer zur X-Richtung (5) verlaufenden Y-Richtung (6) beabstandete Gestellträger (7) aufweist,
- **dass** die Deichsel (2) für den jeweiligen Gestellträger (7) einen zugehörigen Deichselträger (8) aufweist, der mit dem zugehörigen Gestellträger (7) verbunden ist.

5. Anhänger nach Anspruch 4,
**dadurch gekennzeichnet,**
**dass** für den jeweiligen Deichselträger (8) und den zugehörigen Gestellträger (7) eine zugehörige solche Führungsanordnung (9) vorgesehen ist.

6. Anhänger nach einem der Ansprüche 1 bis 5,
**dadurch gekennzeichnet,**
- **dass** die Sicherungsvorrichtung (12) einen Spannverschluss (30) aufweist, der die Deichsel (2) im Sicherungszustand (13) lösbar relativ zum Trägerrahmen (4) fixiert,
- **dass** der Spannverschluss (30) am Fahrgestell (3) einen Haken (31) und an der Deichsel (2) einen Klappverschluss (33) und einen am Klappverschluss (30) angebrachten Ring (32) aufweist, oder umgekehrt,
- **dass** im Sicherungszustand (13) der Haken (31) den Ring (32) hintergreift und der Klappverschluss (33) den Ring (32) gegen den Haken (31) vorspannt.

7. Anhänger nach Anspruch 6,
**dadurch gekennzeichnet,**
**dass** der Haken (31) oder der Klappverschluss (33) und der Ring (32) an einer in X-Richtung (5) der Deichsel (2) zugewandten Stirnseite des Fahrgestells (3) angebracht sind.

8. Anhänger nach Anspruch 4 oder 5 und 6 oder 7,
**dadurch gekennzeichnet,**
**dass** die Deichsel (2) eine zwischen den Deichselträgern (8) verlaufende Platte (34) aufweist, an dem der Klappverschluss (33) sowie der Ring (32) befestig sind oder an dem der Haken (31) befestigt ist.

9. Anhänger nach einem der Ansprüche 1 bis 8,
**dadurch gekennzeichnet,**
**dass** die Sicherungsvorrichtung (12) wenigstens einen Sicherungsbolzen (35) aufweist, der im Sicherungszustand (13) lösbar durch zumindest einen der Gestellträger (7) einen der wenigstens einen Deichselträger (8) geführt ist.

10. Anhänger nach einem der Ansprüche 1 bis 9,
**dadurch gekennzeichnet,**
**dass** das Fahrgestell (1) eine Plattform (16) aufweist, welche gelenkig mit dem Trägerrahmen (4) so verbunden ist, dass sich die hintere Plattform (16) relativ zum Trägerrahmen (4) um eine parallel zur Y-Richtung (6) verlaufende Klappachse (18) zwischen einem Gebrauchszustand (19), in welchem die Plattform (16) in X-Richtung (5) auf den Trägerrahmen (4) folgt, und einem Klappzustand (20), in welchem die Plattform (16) hin zum Trägerrahmen (4) gekappt ist, verstellbar ist.

## Claims

1. A trailer (1) for a motor vehicle,
- with a chassis (3) which has a support frame (4),
- with a drawbar (2) connected to the support frame (4), which follows the support frame (4) in an X-direction (5),
- wherein the support frame (4) has at least one chassis support (7) extending in the X-direction (5),
- wherein the drawbar (2) has an associated drawbar support (8) for at least one of the at least one chassis support (7), which drawbar support is connected to the associated chassis support (7),
- wherein at least one of the at least one drawbar support (8) and the associated chassis support (7) are connected to one another via an associated guide arrangement (9),
- wherein the trailer (1) is adjustable via the at least one guide arrangement (9) between a position of use (10), in which the drawbar (2) is displaced in the X-direction (5) away from the support frame (4), and a stowed position (11), in which the drawbar (2) is displaced in the X-direction (5) towards the support frame (4),
- wherein the trailer (1) has a securing device (12) which is adjustable between a secured state (13), in which the trailer (1) is secured in the position of use (10), and a displacement state, in which the trailer (1) can be displaced between the position of use (10) and the stowed position (11),
**characterized in that**
- at least one of the at least one guide arrangement (9) is designed in such a way that when the trailer (1) is displaced from the position of use (10) into the stowed position (11), the drawbar (2) is also tilted relative to the support frame (4) about a tilting axis (18) extending transversely to the X-direction (5).

2. The trailer according to claim 1,
**characterized in that**
at least one of the at least one guide arrangement (9) has at least one guide (23) extending along the X-direction (5) in one of the associated supports (7, 8) and at least one guide element (24) guided in at least one of the guides (23) on the other associated support (7, 8).

3. The trailer according to claim 1 or 2,
**characterized in that**
at least one of the at least one guide arrangement (9) has at least one guide (23) which is open in the Y direction (6).

4. The trailer according to any one of claims 1 to 3,
**characterized in that**
- the support frame (4) has two chassis supports (7) spaced apart in a Y-direction (6) extending transversely to the X-direction (5),
- the drawbar (2) for the respective chassis support (7) has an associated drawbar support (8) which is connected to the associated chassis support (7).

5. The trailer according to claim 4,
**characterized in that**
an associated guide arrangement (9) of this type is provided for the respective drawbar support (8) and the associated chassis support (7).

6. The trailer according to any one of claims 1 to 5,
**characterized in that**
- the securing device (12) has a clamping lock (30) which fixes the drawbar (2) releasably relative to the support frame (4) in the secured state (13),
- that the clamping lock (30) on the chassis (3) has a hook (31) and on the drawbar (2) has a hinged lock (33) and a ring (32) attached to the hinged lock (30), or vice versa,
- in the secured state (13) the hook (31) engages behind the ring (32) and the hinged lock (33) pretensions the ring (32) against the hook (31).

7. The trailer according to claim 6,
**characterized in that**
the hook (31) or the hinged lock (33) and the ring (32) are attached to an end face of the chassis (3) facing the drawbar (2) in the X-direction (5).

8. The trailer according to claim 4 or 5 and 6 or 7,
**characterized in that**
the drawbar (2) has a plate (34) extending between the drawbar supports (8), to which the hinged lock (33) and the ring (32) are fastened or to which the hook (31) is fastened.

9. The trailer according to any one of claims 1 to 8,
**characterized in that**
the securing device (12) has at least one securing bolt (35) which, in the secured state (13), is releasably guided through at least one of the chassis supports (7) one of the at least one drawbar supports (8).

10. The trailer according to any one of claims 1 to 9,
**characterized in that**
the chassis (1) has a platform (16) which is connected in an articulated manner to the support frame (4) in such a way that the rear platform (16) can be adjusted relative to the support frame (4) about a folding axis (18) running parallel to the Y direction (6) between a state of use (19), in which the platform (16) follows the support frame (4) in the X direction (5), and a folding state (20), in which the platform (16) is folded towards the support frame (4).

## Revendications

1. Remorque (1) pour un véhicule automobile,
- avec un châssis (3) qui présente un cadre de support (4),
- avec une barre d'attelage (2) reliée au cadre de support (4) qui suit le cadre de support (4) dans un sens X (5),
- dans laquelle le cadre de support (4) présente au moins un support de châssis (7) s'étendant dans le sens X (5),
- dans laquelle la barre d'attelage (2) pour au moins un de l'au moins un support de châssis (7) présente un support de barre d'attelage (8) afférent qui est relié au support de châssis (7) afférent,
- dans laquelle au moins un de l'au moins un support de barre d'attelage (8) et du support de châssis (7) afférent sont reliés l'un à l'autre par le biais d'un ensemble de guidage (9) afférent,
- dans laquelle la remorque (1) est déplaçable par le biais de l'au moins un ensemble de guidage (9) entre une position d'utilisation (10) dans laquelle la barre d'attelage (2) est déplacée dans le sens X (5) en s'éloignant du cadre de support (4) et une position de rangement (11) dans laquelle la barre d'attelage (2) est déplacée dans le sens X (5) vers le cadre de support (4),
- dans laquelle la remorque (1) présente un dispositif de sécurisation (12) qui est déplaçable entre un état de sécurisation (13) dans lequel la remorque (1) est fixée dans la position d'utilisation (10) et un état de déplacement dans lequel la remorque (1) est déplaçable entre la position d'utilisation (10) et la position de rangement (11),
**caractérisée en ce que**
- au moins un de l'au moins un ensemble de guidage (9) est configuré de telle manière qu'un basculement de la barre d'attelage (2) par rapport au cadre de support (4) est de plus effectué autour d'un axe de basculement (18) s'étendant transversalement au sens X (5) lors du déplacement de la remorque (1) de la position d'utilisation (10) dans la position de rangement (11).

2. Remorque selon la revendication 1,
**caractérisée en ce que**
au moins un de l'au moins un ensemble de guidage (9) présente dans l'un des supports (7, 8) afférents au moins un guidage (23) s'étendant le long du sens X (5) et au niveau de l'autre support (7, 8) afférent au moins un élément de guidage (24) guidé dans au moins l'un des guidages (23).

3. Remorque selon la revendication 1 ou 2,
**caractérisée en ce que**
au moins un de l'au moins un ensemble de guidage (9) présente au moins un guidage (23) qui est ouvert dans le sens Y.

4. Remorque selon l'une quelconque des revendications 1 à 3,
**caractérisée en ce que**
- le cadre de support (4) présente deux supports de châssis (7) espacés dans un sens Y (6) s'étendant transversalement au sens X (5),
- dans laquelle la barre d'attelage (2) pour le support de châssis (7) respectif présente un support de barre d'attelage (8) afférent qui est relié au support de châssis (7) afférent.

5. Remorque selon la revendication 4,
**caractérisée en ce que**
un tel ensemble de guidage (9) afférent est prévu pour le support de barre d'attelage (8) respectif et le support de châssis (7) afférent.

6. Remorque selon l'une quelconque des revendications 1 à 5,
**caractérisée en ce que**
- le dispositif de sécurisation (12) présente une fermeture de serrage (30) qui fixe la barre d'attelage (2) de manière amovible par rapport au cadre porteur (4) dans l'état de sécurisation (13),
- la fermeture de serrage (30) au niveau du châssis (3) présente un crochet (31) et au niveau de la barre d'attelage (2) une fermeture à rabat (33) et un anneau (32) monté au niveau de la fermeture à rabat (30) ou inversement,
- dans l'état de sécurisation (13), le crochet (31) vient en prise derrière l'anneau (32) et la fermeture à rabat (33) précontraint l'anneau (32) contre le crochet (31).

7. Remorque selon la revendication 6,
**caractérisée en ce que**
le crochet (31) ou la fermeture à rabat (33) et l'anneau (32) sont montés au niveau d'un côté avant du châssis (3) tourné dans le sens X (5) vers la barre d'attelage (2).

8. Remorque selon la revendication 4 ou 5 et 6 ou 7,
**caractérisée en ce que**
la barre d'attelage (2) présente une plaque (34) s'étendant entre les supports de barre d'attelage (8), à laquelle la fermeture à rabat (33) ainsi que l'anneau (32) sont fixés ou à laquelle le crochet (31) est fixé.

9. Remorque selon l'une quelconque des revendications 1 à 8,
**caractérisée en ce que**
le dispositif de sécurisation (12) présente au moins un boulon de sécurisation (35) qui traverse de manière amovible au moins l'un des supports de châssis (7), l'un de l'au moins un support de barre d'attelage (8) dans l'état de sécurisation (13).

10. Remorque selon l'une quelconque des revendications 1 à 9,
**caractérisée en ce que**
le châssis (1) présente une plateforme (16) qui est reliée de manière articulée au cadre de support (4) de sorte que la plateforme arrière (16) soit déplaçable par rapport au cadre de support (4) autour d'un axe de rabattement (18) s'étendant parallèlement au sens Y (6) entre un état d'utilisation (19) dans lequel la plateforme (16) suit dans le sens X (5) le cadre porteur (4) et un état de rabattement (20) dans lequel la plateforme (16) est rabattue vers le cadre de support (4).
